# EUROPEAN PATENT APPLICATION

(11) **EP 4 844 924 A1**
(43) Date of publication of application: **25.11.2026**
(21) Application number: 24926889.7
(22) Date of filing: 13.12.2024
(51) Int. Cl.: H01M 50/264

(54) **BATTERY, ELECTRICAL DEVICE AND ENERGY STORAGE APPARATUS**

(30) Priority: 29.02.2024 CN 202420390717 U
(71) Applicant: Contemporary Amperex Technology Co., Limited, Ningde, Fujian 352100 (CN)
(72) Inventor: TIAN, Maoting, Ningde, Fujian 352100 (CN); JIN, Qiu, Ningde, Fujian 352100 (CN); LIU, Shuangxu, Ningde, Fujian 352100 (CN); LI, Yao, Ningde, Fujian 352100 (CN)
(74) Representative: Lorenz Seidler Gossel Part. mbB
(86) International application number: PCT/CN2024/139198
(87) International publication number: WO 2025/180031

(57) **Abstract**

A battery (100), an electrical device and an energy storage apparatus. The battery (100) comprises several battery cells (20), a metal strap (10) and an insulating component (30), wherein each battery cell (20) comprises a metal casing (21); the metal strap (10) is wound around the several battery cells (20) for binding the several battery cells; the insulating component (30) is connected to the battery cells (20) or the metal strap (10), and the insulating component (30) is at least partially located between the battery cells (20) and the metal strap (10); and the insulation resistance value between the metal strap (10) and each metal casing (21) is greater than or equal to A*B*1000 Ohms, A being the nominal voltage of each battery cell (20) and having a unit of V, and B being the number of battery cells (20) which are connected in series and having a unit of piece.

## Description

### CROSS-REFERENCE TO RELATED APPLICATIONS

This application claims priority to Chinese Patent Application No. 202420390717.0, filed on February 29, 2024, which is incorporated herein by reference in its entirety.

### TECHNICAL FIELD

This application relates to the field of energy storage and traction battery technologies, and in particular, to a battery, an electric device, and an energy storage apparatus.

### BACKGROUND

Metal straps are typically used during assembly of batteries to enhance structural stability for fixing batteries and absorbing swelling.

In the related art, to protect a battery cell in a battery, an insulation coating is typically applied on a surface of a metal strap and/or on a surface of a housing of the battery cell. When the battery experiences thermal runaway, the insulation coating is prone to insulation failure, resulting in insulation failure between the metal strap and the battery cell.

### SUMMARY

The present invention is intended to solve at least one of the technical problems in the related art to some extent.

In view of this, an objective of the present invention is to provide a battery.

Another objective of the present invention is to provide an electric device.

Another objective of the present invention is to provide an energy storage apparatus.

According to a first aspect, this application provides a battery, including a plurality of battery cells, a metal strap, and an insulating member. The plurality of battery cells are arranged side by side, and each battery cell includes a metal housing. The metal strap wraps around the plurality of battery cells and is configured to bind the plurality of battery cells. The insulating member is connected to the battery cells and/or the metal strap, and the insulating member is at least partially located between the battery cells and the metal strap. An insulation resistance between the metal strap and each metal housing is greater than or equal to A × B × 1000 ohms, where A is a nominal voltage of the battery cell measured in volts, and B is the number of the battery cells connected in series.

In the battery according to this application, an independent insulating member is provided, the insulating member is made to be connected to the battery cells or the metal strap, and the insulating member is made to be at least partially located between the battery cells and the metal strap, so that the insulating member can protect the battery cells. The insulation resistance between the metal strap and each metal housing is greater than or equal to A × B × 1000 ohms, so that even when the battery experiences thermal runaway, the insulation resistance between the metal strap and the metal housing can still be maintained within a range greater than or equal to A × B × 1000 ohms, allowing for no problem of insulation failure between the metal strap and the battery cell under thermal runaway of the battery.

According to a second aspect, this application provides an electric device, including the foregoing battery.

According to a third aspect, this application provides an energy storage apparatus, including the foregoing battery.

For additional aspects and advantages of the present invention, some will be given in the following description, and some will become apparent in the following description or will be understood in the practice of the present invention.

### BRIEF DESCRIPTION OF DRAWINGS

FIG. 1 is an exploded view of a partial structure of a battery according to an embodiment of this application;
FIG. 2 is a side view of a battery according to an embodiment of this application;
FIG. 3 is a partial schematic structural diagram of a battery according to another embodiment of this application;
FIG. 4 is a side view of a battery according to another embodiment of this application;
FIG. 5 is a schematic structural diagram of a battery according to another embodiment of this application;
FIG. 6 is a partial schematic structural diagram of a battery according to yet another embodiment of this application;
FIG. 7 is a partial schematic structural diagram of a battery according to still another embodiment of this application;
FIG. 8 is a schematic structural diagram of a metal strap fitting with an insulating substrate according to this application;
FIG. 9 is a schematic structural diagram of a metal strap fitting with an isolation layer and a coating according to this application;
FIG. 10 is a schematic structural diagram of a metal strap fitting with an isolation layer and an insulating tape according to this application;
FIG. 11 is a schematic structural diagram of a metal strap fitting with an insulating tape according to this application;
FIG. 12 is a schematic structural diagram of a metal strap fitting with a coating according to this application;

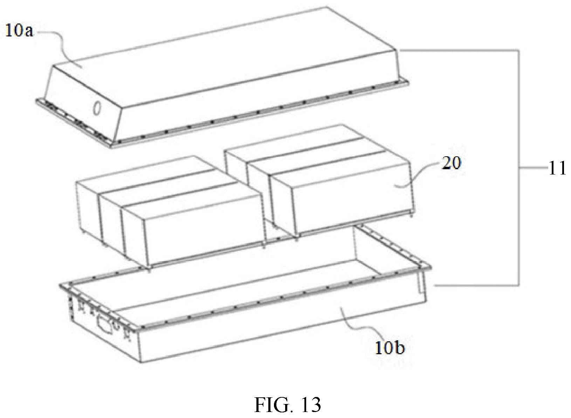

FIG. 13 is a schematic exploded view of a structure of a battery according to another embodiment of this application;

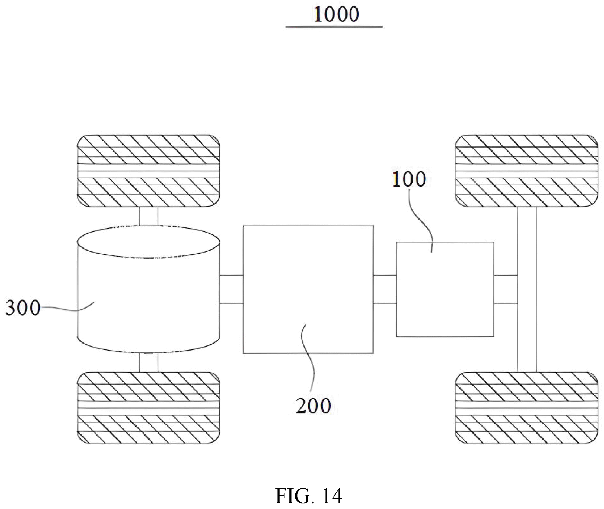

FIG. 14 is a schematic structural diagram of an electric device according to an embodiment of this application; and
FIG. 15 is a schematic structural diagram of an insulation resistance test performed using an insulation withstand voltage test apparatus according to this application.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", "have", and any other variations thereof in the specification, claims and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

Reference to "embodiment" in the specification means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may be combined with another embodiment.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two components, or an interaction between two components. Persons of ordinary skill in the art can understand specific meanings of these terms in the embodiments of this application as suitable to specific situations.

The batteries mentioned in the art can be classified into primary batteries and rechargeable batteries based on whether the batteries are rechargeable. Currently, common types of rechargeable batteries include lead-acid battery, nickel-hydrogen battery, and lithium-ion battery. Lithium-ion batteries are currently widely used in battery electric vehicles and hybrid electric vehicles. A lithium-ion battery used for this purpose has a relatively low capacity but greater output and charging currents, and also has longer service life but higher cost.

The battery described in the embodiments of this application is a rechargeable battery. The following mainly uses a lithium-ion battery as an example to describe the embodiments disclosed in this application. It should be understood that the embodiments disclosed in this application are applicable to any other appropriate types of rechargeable batteries. The battery mentioned in the embodiments disclosed in this application can be directly or indirectly applied to an appropriate apparatus to supply power to the apparatus.

The battery mentioned in the embodiments disclosed in this application is a single physical module that includes one or more battery cells for providing a predetermined voltage and capacity. A battery cell is a basic unit in a battery and can be generally divided based on packaging methods into the following types: cylindrical battery cell, cuboid battery cell, and pouch battery cell. The following description mainly focuses on cuboid battery cells. It should be understood that the embodiments described below are also applicable to cylindrical battery cells or pouch battery cells in some aspects.

A battery cell includes a positive electrode plate, a negative electrode plate, an electrolyte, and a separator. Working of a lithium-ion battery cell mainly relies on migration of lithium ions between the positive electrode plate and the negative electrode plate. A film structure with three layers of materials in a cylindrical battery cell is wound into a cylindrical electrode assembly, and a film structure in a cuboid battery cell is approximately wound or laminated into a cuboid electrode assembly.

In a typical battery cell structure, a battery cell includes a housing, an electrode assembly, and an electrolyte. The electrode assembly is accommodated in the housing of the battery cell, and the electrode assembly includes a positive electrode plate, a negative electrode plate, and a separator. The housing includes a bottom shell and an end cover. The bottom shell includes an accommodating cavity formed by a plurality of walls and an opening. The end cover is arranged at the opening to close the accommodating cavity. In addition to the electrode assembly, the electrolyte is also accommodated in the accommodating cavity. The positive electrode plate and the negative electrode plate in the electrode assembly include tabs. To allow a high current to pass through without any fusing, a plurality of positive tabs are provided and stacked together, and a plurality of negative tabs are provided and stacked together. The tabs are electrically connected to electrode terminals located outside the battery cell through connecting members, and the electrode terminals generally include a positive electrode terminal and a negative electrode terminal. For a cuboid battery cell, the electrode terminals are generally disposed on the end cover. A plurality of battery cells are connected in series and/or in parallel through electrode terminals for various application scenarios.

In some high-power application scenarios such as an electric vehicle, the application of the battery includes three levels: a battery cell, a battery module, and a battery. The battery module is formed by electrically connecting a specific quantity of battery cells and putting the battery cells into a frame to protect the battery cells from external impact, heat, vibration, and the like. The battery is a final state of a battery system assembled in an electric vehicle. A battery typically includes a box configured to enclose one or more battery cells.

In recent years, new energy vehicles have developed by leaps and bounds. In the field of electric vehicles, traction batteries, as the power source of electric vehicles, play an irreplaceable and important role. A battery includes a box and a plurality of battery cells accommodated in the box. As a core component of new energy vehicles, the battery has high requirements in terms of safety. At present, mechanical safety of traction batteries during use is one of the battery safety issues of general concern to consumers.

The battery provided in the embodiments of this application may be used as a power source for electric devices. The electric devices may be mobile phones, portable devices, notebook computers, electric bicycles, electric vehicles, ships, spacecrafts, electric toys, electric tools, and the like. For example, the spacecraft includes an airplane, a rocket, a space shuttle, and a spaceship; the electric toy includes a fixed or mobile electric toy, for example, a game console, an electric vehicle toy, an electric ship toy, an electric airplane toy, and the like; and the electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, an electric planer, and the like.

For ease of description, the electric apparatus of an embodiment of this application being a vehicle 1000 is used as an example for description of the following embodiments.

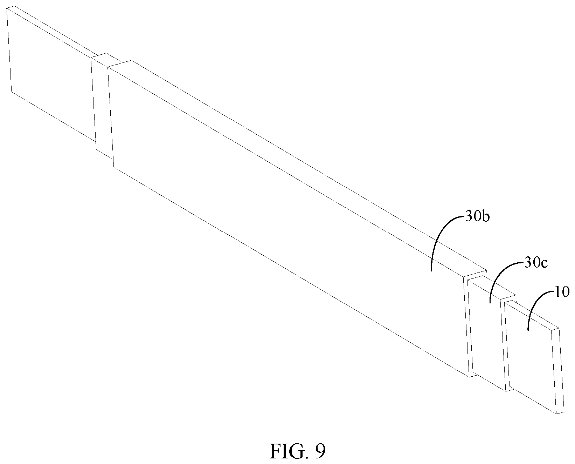

For example, FIG. 9 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. A battery 100, a controller 200, and a motor 300 may be provided inside the vehicle 1000, where the controller 200 is configured to control the battery 100 to supply power to the motor 300. For example, the battery 100 may be disposed at the bottom, front, or rear of the vehicle 1000. The battery 100 may be configured to supply power to the vehicle 1000. For example, the battery 100 may be used as an operational power source for the vehicle 1000 for use in a circuit system of the vehicle 1000, for example, to satisfy power needs of start, navigation, and running of the vehicle 1000. In another embodiment of this application, the battery 100 may be used not only as the operational power source for the vehicle 1000, but also as a driving power source for the vehicle 1000, replacing or partially replacing fossil fuel or natural gas to provide driving traction for the vehicle 1000.

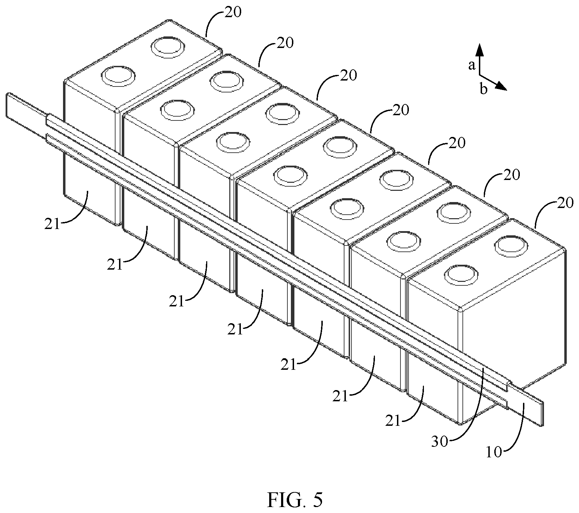

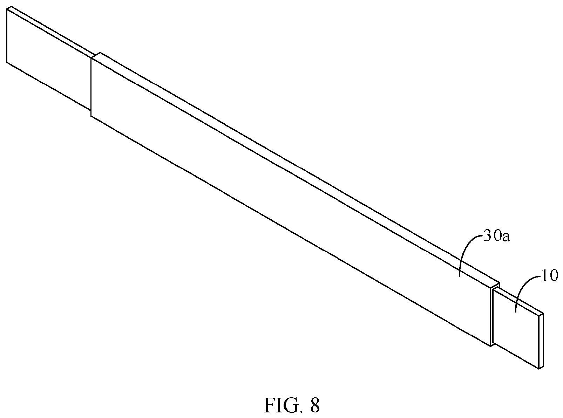

For example, referring to FIG. 8, FIG. 5 is an exploded view of a structure of a battery 100 according to some embodiments of this application. The battery 100 includes a box 11 and a battery cell 20. The box 11 has an accommodating space for accommodating the battery cell 20. The box 11 may adopt various structures. In some embodiments, the box 11 may include a first portion 10a and a second portion 10b. The first portion 10a and the second portion 10b fit with each other, and the first portion 10a and the second portion 10b jointly define an accommodating space for accommodating the battery cell 20. The second portion 10b may be a hollow structure with one end open, the first portion 10a may be a plate structure, and the first portion 10a covers an open side of the second portion 10b, so that the first portion 10a and the second portion 10b jointly define the accommodating space. Alternatively, the first portion 10a and the second portion 10b may also both be hollow structures with one side open, and the open side of the first portion 10a fits with the open side of the second portion 10b. Certainly, the housing 11 formed by the first portion 10a and the second portion 10b may have various shapes, such as cylinder or cuboid.

In the battery 100, one or a plurality of battery cells 20 may be provided. When a plurality of battery cells 20 are provided in the battery 100, the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 11; or certainly, the battery 100 may be formed by a plurality of battery cells 20 being connected in series, parallel, or series-parallel first to form a battery module and then a plurality of battery modules being connected in series, parallel, or series-parallel to form an entirety which is accommodated in the box 11. The battery 100 may further include other structures. For example, the battery 100 may further include a busbar configured to implement an electrical connection between the plurality of battery cells 20, for example, a parallel connection, a series connection, or a series-parallel connection. Specifically, the busbar may implement the electrical connection among the battery cells 20 by connecting electrode terminals of the battery cells 20. Further, the busbar may be fixed to the electrode terminals of the battery cell 20 by welding. Electrical energy of the plurality of battery cells 20 may be further led out through a conductive mechanism that passes through the box 11. Optionally, the conductive mechanism may also belong to the busbar.

Each battery cell 20 may be a secondary battery or a primary battery; or may be a lithium-sulfur battery, a sodium-ion battery, or a magnesium-ion battery, without being limited thereto. The battery cell 20 may be cylindrical, flat, cuboid, or of other shapes.

Metal straps are typically used during assembly of batteries to enhance structural stability for fixing batteries and absorbing swelling.

In the related art, to protect a battery cell in a battery, an insulation coating is typically applied on a surface of a metal strap and/or on a surface of a housing of the battery cell. When the battery experiences thermal runaway, the insulation coating is prone to form gaps, resulting in insulation failure between the metal strap and the battery cell.

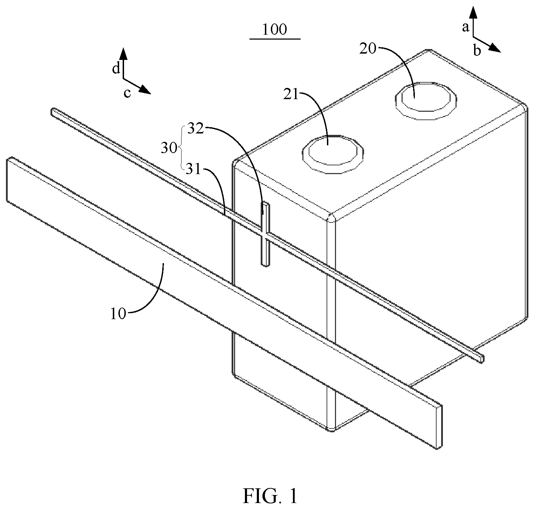

In view of this, referring to FIGs. 1 to 12, this application provides a battery 100, including a plurality of battery cells 20, a metal strap 10, and an insulating member 30. The plurality of battery cells 20 are arranged side by side, and each battery cell 20 includes a metal housing 21. The metal strap 10 wraps around the plurality of battery cells 20 and is configured to bind the plurality of battery cells 20. The insulating member 30 is connected to the battery cells 20 and/or the metal strap 10, and the insulating member 30 is at least partially located between the battery cells 20 and the metal strap 10. An insulation resistance between the metal strap 10 and each metal housing 21 is greater than or equal to A × B × 1000 ohms, where A is a nominal voltage of the battery cell 20 measured in volts, and B is the number of the battery cells 20 connected in series.

In some embodiments, the battery 100 may further include two end plates. The plurality of battery cells 20 are disposed between the two end plates. Two metal straps 10 may be provided. The two metal straps 10 are separately disposed on two sides of the battery cells 20 and connected to the two end plates, so that the two metal straps 10 and the two end plates enclose a fixing ring for binding the plurality of battery cells 20. Certainly, in other embodiments, a single complete metal strap 10 may alternatively be directly used to wrap around the plurality of battery cells 20 to bind the plurality of battery cells 20.

In actual application, the insulating member 30 may specifically be connected to the battery cells 20 or the metal strap 10 by means of clamping, winding, adhesive, or the like. This is not specifically limited herein.

In actual application, the insulating member 30 may be a rigid member or a flexible member, provided that it can be connected to the battery cells 20 or the metal strap 10 to provide insulation and protection. This is not specifically limited herein.

Moreover, the insulating member 30 is made of an insulating material. The material used is a high-temperature-resistant and corrosion-resistant insulating material. For example, it may be sheet molding compound, phenolic molding compound/unsaturated polyester bulk molding compound, epoxy glass fiber board, or the like, which is not subjected to crack or damage under a mechanical force of 7 KN.

Moreover, a cross-section of the insulating member 30 may be substantially C-shaped, substantially cross-shaped, or substantially rectangular-frame-shaped, strip-shaped, or of other shapes.

For example, the metal strap 10 may specifically be a steel strap.

It should be noted that the nominal voltage of the battery cell 20 can be obtained from a specification sheet of the battery 100 or from a nameplate of the battery 100. The number of the battery cells 20 connected in series can be obtained from the specification sheet of the battery 100 or from the nameplate of the battery 100.

It should be noted that the insulation performance between the metal strap 10 and the metal housing 21 can be tested according to the following steps in GBT 36276-2023:
(a) Connect a positive electrode of the initialized and charged battery 100 and an externally exposed conductive part to an insulation withstand voltage test apparatus 2000, and turn off the insulation resistance monitoring function of the battery 100.
(b) Apply a test voltage for 5 min, record the insulation resistance between the positive electrode and the externally exposed conductive part and the test voltage, and disconnect the connection between the insulation withstand voltage test apparatus 2000 and the battery 100.
(c) Connect the positive electrode of the battery 100 and the externally exposed guiding part to the insulation withstand voltage test apparatus 2000.
(d) Apply a test voltage for 5 min, record the insulation resistance between the negative electrode and the externally exposed conductive part and the test voltage, disconnect the connection between the insulation withstand voltage test apparatus 2000 and the battery 100, and take out the test sample.
(e) Calculate ratios of the insulation resistance between the positive and negative electrodes and the externally exposed conductive part to the nominal voltage of the battery 100 separately.

It should be noted that when the insulation performance test is performed, if an insulating film (such as a blue film) is attached to a surface of the battery cell, the blue film needs to be torn off before the insulation performance test.

It should be noted that the insulation withstand voltage test apparatus 2000 used should have sufficient accuracy and stability, and its accuracy should be one order of magnitude higher than the accuracy of the measured index or the error should be less than 1/3 of the allowable error of the measured parameter.

Optionally, the insulation resistance between the metal strap 10 and the battery cell 20 can be ensured to be A × B × 1000 ohms, A × B × 1200 ohms, A × B × 1300 ohms, A × B × 1400 ohms, A × B × 1500 ohms, or the like.

In the technical solutions of the embodiments of this application, an independent insulating member 30 is provided, the insulating member 30 is made to be connected to the battery cells 20 or the metal strap 10, and the insulating member 30 is made to be at least partially located between the battery cells 20 and the metal strap 10, so that the insulating member 30 can protect the battery cells 20. The insulation resistance between the metal strap 10 and each metal housing 21 is greater than or equal to A × B × 1000 ohms, so that even when the battery 100 experiences thermal runaway, the insulation resistance between the metal strap 10 and the metal housing 21 can still be maintained within a range greater than or equal to A × B × 1000 ohms, allowing for no problem of insulation failure between the metal strap 10 and the battery cell 20 under thermal runaway of the battery 100.

In addition, since the insulating member 30 is an independent component, the insulating member 30 does not form gaps under deformation and pulling of the metal housing 21 and the metal strap 10, thereby preventing an electrolyte from adhering to the gaps and forming creepage, which can also alleviate the problem that insulation failure is prone to occur between the metal strap 10 and the battery cell 20 during thermal runaway.

In an embodiment of this application, the insulating member 30 is placed at an ambient temperature greater than or equal to 250°C and less than or equal to 500°C for 5 min, such that the insulation resistance between the metal strap 10 and each metal housing 21 is greater than or equal to A × B × 1000 ohms.

Optionally, the insulation resistance between the metal strap 10 and the battery cell 20 can be ensured to be greater than or equal to A × B × 1000 ohms at ambient temperatures of 250°C, 280°C, 300°C, 400°C, 500°C, or the like.

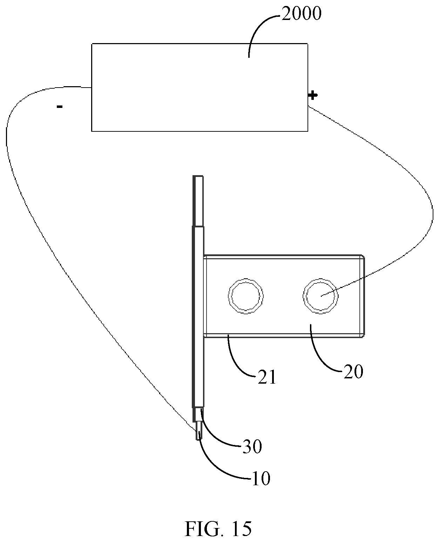

Specifically, the insulation performance between the metal strap 10 and the metal housing 21 can be tested using the following method with reference to FIG. 15:

Place the insulating member 30 in an environment greater than or equal to 250°C to 500°C for 5 min.

Place the insulating member 30 between the metal strap 10 and the battery housing 21 (a blue film (if present) outside the metal housing 21 needs to be torn off), use an insulation withstand voltage test apparatus 2000 as the test equipment, electrically connect positive and negative electrodes of the insulation withstand voltage test apparatus 2000 to two aluminum blocks respectively, and apply a voltage of 500 V/DC to 1000 V/DC thereto for 1 minute to obtain the insulation resistance through test.

Such design can allow the insulation resistance between the metal strap 10 and the metal housing 21 to be maintained within a range greater than or equal to A × B × 1000 ohms after the insulating member 30 is treated at a temperature of 250°C to 500°C.

In an embodiment of this application, the insulating member 30 is phenolic molding compound/unsaturated polyester bulk molding compound, epoxy glass fiber, mica, ceramic coating, polytetrafluoroethylene, polyimide, or aerogel. The ceramic coating may be an alumina ceramic coating, a zirconia ceramic coating, a titania ceramic coating, a siloxane ceramic, or the like. Such design can make the insulating member 30 a high-temperature-resistant material to meet the requirement that after the insulating member 30 is treated at a temperature of 250°C to 500°C, the insulation resistance between the metal strap 10 and the metal housing 21 can still be maintained within a range greater than or equal to A × B × 1000 ohms. In this way, under thermal runaway of the battery 100, the insulating member 30 can still maintain a good insulation effect to alleviate a lap short circuit between the metal housing 21 and the metal strap 10.

In some embodiments, the insulation performance between the metal strap 10 and the metal housing 21 can be tested according to the steps in GBT 36276-2023, and the results are shown in the following table.

**Table 1**

| Insulating member | Test ambient temperature (°C) | Dwell time at this temperature (min) | Test result |
|---|---|---|---|
| Insulating member | Test ambient temperature (°C) | Dwell time at this temperature (min) | Test result |
| Ethylene vinyl acetate copolymer | 250 | 5 min | Ethylene vinyl acetate copolymer melts, and lap short circuit occurs between the metal housing and the metal strap |
| Polyethylene terephthalate | 250 | 5 min | Polyethylene terephthalate melts, and lap short circuit occurs between the metal housing and the metal strap |
| Mica | 450 | 5 min | Insulation resistance is 15.92 GΩ |

From the test results in Table 1, the following can be known:

When Ethylene vinyl acetate copolymer is used as the insulating member 30, under the test conditions of an ambient temperature of 250°C and a test time of 5 min, the ethylene vinyl acetate copolymer melts and a lap short circuit occurs between the metal housing 21 and the metal strap 10. It can be known that under thermal runaway of the battery 100, the insulation performance of the insulating member 30 is poor.

When polyethylene terephthalate is used as the insulating member 30, under the test conditions of an ambient temperature of 250°C and a test time of 5 min, the polyethylene terephthalate melts and a lap short circuit occurs between the metal housing 21 and the metal strap 10. It can be known that under thermal runaway of the battery 100, the insulation performance of the insulating member 30 is poor.

When mica is used as the insulating member 30, under the test conditions of an ambient temperature of 450°C and a test time of 5 min, the insulation resistance between the metal strap 10 and the metal housing 21 can be 15.92 GΩ. It can be known that under thermal runaway of the battery 100, the insulation performance of the insulating member 30 is good.

In an embodiment of this application, the insulating member 30 is placed at an ambient temperature greater than or equal to 500°C and less than or equal to 1500°C for 1 min, such that the insulation resistance between the metal strap 10 and each metal housing 21 is greater than or equal to A × B × 1000 ohms.

Optionally, under ambient temperatures of 500°C, 600°C, 700°C, 800°C, 1000°C, 1200°C, 1500°C, or the like, the insulation resistance between the metal strap 10 and the battery cell 20 can be ensured to be greater than or equal to A × B × 1000 ohms.

Specifically, the insulation performance between the metal strap 10 and the metal housing 21 can be tested using the following method with reference to FIG. 15:

Place the insulating member 30 in an environment greater than or equal to 500°C to 1500°C for 1 min.

Place the insulating member 30 between the metal strap 10 and the battery housing 21 (a blue film (if present) outside the metal housing 21 needs to be torn off), use an insulation withstand voltage test apparatus 2000 as the test equipment, electrically connect positive and negative electrodes of the insulation withstand voltage test apparatus 2000 to two aluminum blocks respectively, and apply a voltage of 500 V/DC to 1000 V/DC thereto for 1 minute to obtain the insulation resistance through test.

Such design can allow the insulation resistance between the metal strap 10 and the metal housing 21 to be maintained within a range greater than or equal to A × B × 1000 ohms after the insulating member 30 is treated at a temperature of 500°C to 1500°C, so that the high-temperature resistance requirement of the insulating member 30 is further improved. In this way, under thermal runaway of the battery 100, the insulating member 30 can still maintain a good insulation effect to alleviate the lap short circuit between the metal housing 21 and the metal strap 10.

In an embodiment of this application, the insulating member 30 is mica or ceramic coating.

The ceramic coating may be an alumina ceramic coating, a zirconia ceramic coating, a titania ceramic coating, a siloxane ceramic, or the like.

Such design can make the material of the insulating member 30 a more high-temperature-resistant material to meet the requirement that after the insulating member 30 is treated at a temperature of 500°C to 1500°C, the insulation resistance between the metal strap 10 and the metal housing 21 can still be maintained within a range greater than or equal to A × B × 1000 ohms. In this way, under thermal runaway of the battery 100, the insulating member 30 can still maintain a good insulation effect to alleviate the lap short circuit between the metal housing 21 and the metal strap 10.

In an embodiment of this application, the insulating member 30 is placed at an ambient temperature greater than or equal to 250°C and less than or equal to 500°C for 5 min, such that the insulation resistance between the metal strap 10 and each metal housing 21 is greater than or equal to A × B × 5000 ohms.

Optionally, under ambient temperatures of 250°C, 280°C, 300°C, 400°C, 500°C, or the like, the insulation resistance between the metal strap 10 and the battery cell 20 can be ensured to be greater than or equal to A × B × 5000 ohms.

Specifically, the insulation performance between the metal strap 10 and the metal housing 21 can be tested using the following method with reference to FIG. 15:

Place the insulating member 30 in an environment greater than or equal to 250°C to 500°C for 5 min.

Place the insulating member 30 between the metal strap 10 and the battery housing 21 (a blue film (if present) outside the metal housing 21 needs to be torn off), use an insulation withstand voltage test apparatus 2000 as the test equipment, electrically connect positive and negative electrodes of the insulation withstand voltage test apparatus 2000 to two aluminum blocks respectively, and apply a voltage of 500 V/DC to 1000 V/DC thereto for 1 minute to obtain the insulation resistance through test.

In this embodiment, the insulating member 30 is at least one of phenolic molding compound/unsaturated polyester bulk molding compound, epoxy glass fiber, mica, ceramic coating, polytetrafluoroethylene, polyimide, and aerogel. This can make the insulating member 30 a high-temperature-resistant material to meet the requirement that after the insulating member 30 is treated at a temperature of 250°C to 500°C, the insulation resistance between the metal strap 10 and the metal housing 21 can still be maintained within a range greater than or equal to A × B × 5000 ohms.

Such design can allow the insulation resistance between the metal strap 10 and the metal housing 21 to be maintained within a range greater than or equal to A × B × 5000 ohms after the insulating member 30 is treated at a temperature of 250°C to 500°C, so that the high-temperature resistance requirement of the insulating member 30 is further improved. In this way, under thermal runaway of the battery 100, the insulating member 30 can still maintain a good insulation effect to alleviate the lap short circuit between the metal housing 21 and the metal strap 10.

In an embodiment of this application, the insulating member 30 is placed at an ambient temperature greater than or equal to 500°C and less than or equal to 1500°C for 1 min, such that the insulation resistance between the metal strap 10 and each metal housing 21 is greater than or equal to A × B × 5000 ohms.

Optionally, under ambient temperatures of 500°C, 600°C, 700°C, 800°C, 1000°C, 1200°C, 1500°C, or the like, the insulation resistance between the metal strap 10 and the battery cell 20 can be ensured to be greater than or equal to A × B × 1000 ohms.

Specifically, the insulation performance between the metal strap 10 and the metal housing 21 can be tested using the following method with reference to FIG. 15:

Place the insulating member 30 in an environment greater than or equal to 500°C to 1500°C for 1 min.

Place the insulating member 30 between the metal strap 10 and the battery housing 21 (a blue film (if present) outside the metal housing 21 needs to be torn off), use an insulation withstand voltage test apparatus 2000 as the test equipment, electrically connect positive and negative electrodes of the insulation withstand voltage test apparatus 2000 to two aluminum blocks respectively, and apply a voltage of 500 V/DC to 1000 V/DC thereto for 1 minute to obtain the insulation resistance through test.

Such design can allow the insulation resistance between the metal strap 10 and the metal housing 21 to be maintained within a range greater than or equal to A × B × 5000 ohms after the insulating member 30 is treated at a temperature of 500°C to 1500°C, so that the high-temperature resistance requirement of the insulating member 30 is further improved. In this way, under thermal runaway of the battery 100, the insulating member 30 can still maintain a good insulation effect to alleviate the lap short circuit between the metal housing 21 and the metal strap 10.

In an embodiment of this application, A is greater than or equal to 3.2 V and A is less than or equal to 3.8 V; and/or B is greater than or equal to 48 and B is less than or equal to 104.

Optionally, A may be 3.2 V, 3.3 V, 3.4 V, 3.5 V, 3.6 V, 3.7 V, 3.8 V, or the like; and B may be 48, 56, 74, 80, 88, 104, or the like.

Such design can enable the commonly used vehicle battery 100 to meet the requirement that the insulation resistance between the metal strap 10 and each metal housing 21 is greater than or equal to A × B × 1000 ohms, allowing for no problem of insulation failure between the metal strap 10 and the battery cell 20 under thermal runaway of the battery 100. In this way, under thermal runaway of the battery 100, the insulating member 30 can still maintain a good insulation effect to alleviate the lap short circuit between the metal housing 21 and the metal strap 10.

In an embodiment of this application, a positive electrode plate of the battery cell 20 contains lithium-containing phosphate, and the insulating member 30 is placed at an ambient temperature greater than or equal to 250°C and less than or equal to 500°C for 5 min, such that the insulation resistance between the metal strap 10 and each metal housing 21 is greater than or equal to A × B × 1000 ohms.

Optionally, under ambient temperatures of 250°C, 280°C, 300°C, 400°C, 500°C, or the like, the insulation resistance between the metal strap 10 and the battery cell 20 can be ensured to be greater than or equal to A × B × 1000 ohms.

With such design, when the positive electrode plate of the battery cell 20 contains lithium-containing phosphate, the insulation resistance between the metal strap 10 and the metal housing 21 can still be maintained within a range greater than or equal to A × B × 1000 ohms after the insulating member 30 is treated at a temperature of 250°C to 500°C.

In an embodiment of this application, a positive electrode plate of the battery cell 20 includes LiₐNi_{b}Co_{c}M_{d}OₑA_{f}, where 0 < a ≤ 1.2; 0 < b < 1; 0 < c < 1; 0 < d < 1; 1 ≤ e ≤ 2; 0 ≤ f ≤ 1; M contains but is not limited to one or more of Mn, Al, Zr, Zn, Cu, Cr, Mg, Fe, V, Ti, and B; A contains but is not limited to one or more of N, F, S, and Cl; and the insulating member 30 is placed at an ambient temperature greater than or equal to 500°C and less than or equal to 1500°C for 1 min, such that the insulation resistance between the metal strap 10 and each metal housing 21 is greater than or equal to A × B × 1000 ohms.

Optionally, under ambient temperatures of 500°C, 600°C, 700°C, 800°C, 1000°C, 1200°C, 1500°C, or the like, the insulation resistance between the metal strap 10 and the metal housing 21 can be ensured to be greater than or equal to A × B × 1000 ohms.

With such design, when the positive electrode plate of the battery cell 20 includes LiₐNi_{b}Co_{c}M_{d}OₑA_{f}, the insulation resistance between the metal strap 10 and the metal housing 21 can still be maintained within a range greater than or equal to A × B × 1000 ohms after the insulating member 30 is treated at a temperature of 500°C to 1500°C, so that the high-temperature resistance requirement of the insulating member 30 is further improved. In this way, under thermal runaway of the battery 100, the insulating member 30 can still maintain a good insulation effect to alleviate the lap short circuit between the metal housing 21 and the metal strap 10.

In an embodiment of this application, the insulating member 30 is an insulating substrate 30a, an insulating tape 37, or a coating 30b.

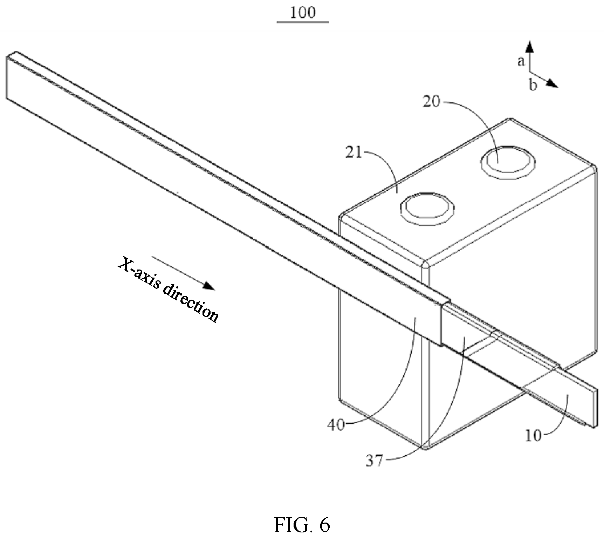

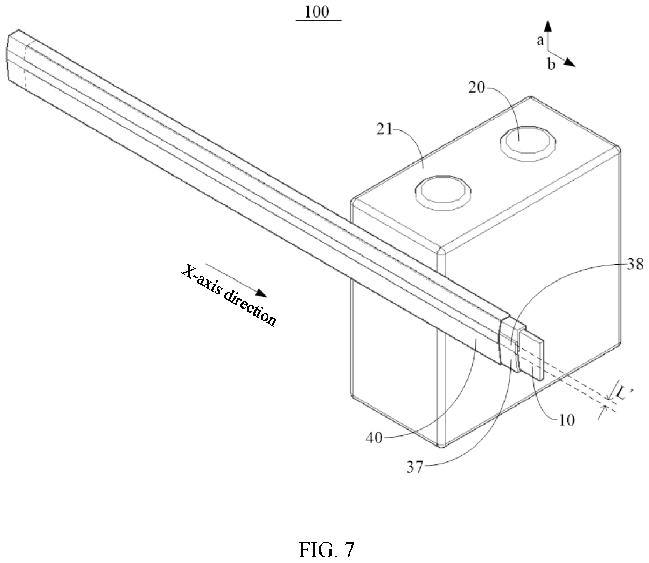

Referring to FIGs. 6 and 7, the insulating member 30 is an insulating tape 37, and the insulating tape 37 wraps around the metal strap 10. With such design, a high-temperature-resistant insulating tape 37 directly wraps around the metal strap 10, which can reduce the use of the insulating substrate 30a, reduce the cost, and also enable the insulating member 30 to maintain normal insulation effect in a high-temperature environment.

Alternatively, referring to FIGs. 8 to 10, the insulating member 30 is an insulating substrate 30a, and the insulating substrate 30a is attached to the metal strap 10. Such design can make the insulating substrate 30a of the insulating member 30 a high-temperature-resistant material without the need to provide an additional high-temperature-resistant structure (such as a high-temperature-resistant coating) on the insulating substrate 30a, thereby simplifying the process.

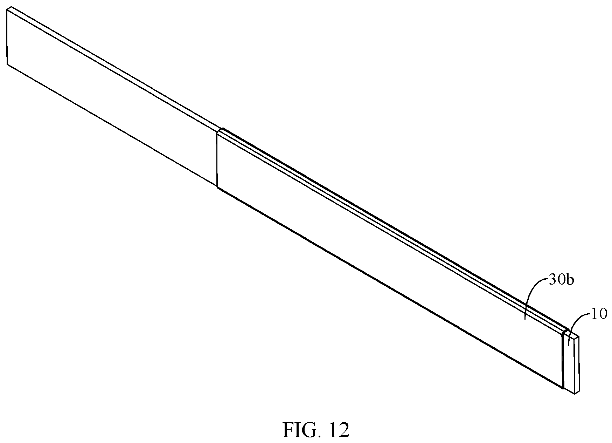

Alternatively, referring to FIG. 12, the insulating member 30 is a coating 30b, and the coating 30b is applied on the metal strap 10. With such design, a high-temperature-resistant coating 30b is directly selected to be applied on a surface of the metal strap 10, which features a simple process and can also enable the battery cell 20 and the metal strap 10 to maintain normal insulation effect in a high-temperature environment. It should be noted that the coating 30b may be made of a material such as an alumina ceramic coating, a zirconia ceramic coating, a titania ceramic coating, a siloxane ceramic, polytetrafluoroethylene, or polyimide.

In some embodiments, to facilitate wrapping of the insulating tape 37, the insulating tape 37 may be made of a flexible material. For example, the insulating tape 37 may be prepared from fiber cloth and ceramic rubber, or may be ceramic fiber cloth. It should be noted that ceramic fiber cloth is made by adding a specified proportion of organic fibers to ceramic fibers, lining with glass filaments to spin into yarn, and then weaving into cloth to obtain ceramic fiber cloth.

Optionally, the insulating tape 37 may include ceramic rubber and fiber cloth that are laminated. For example, the ceramic rubber may be silicone rubber.

Such design can make the insulating tape 37 a flexible material with good insulation resistance, making it easier for the insulating tape 37 to wrap around the metal strap 10.

In actual application, an extension direction of the metal strap 10 is defined as a length direction of the metal strap 10. A wrapping direction of the insulating tape 37 may be consistent with the length direction of the metal strap 10, may be perpendicular to the length direction of the metal strap 10, or may be at an acute or obtuse angle with the length direction of the metal strap 10.

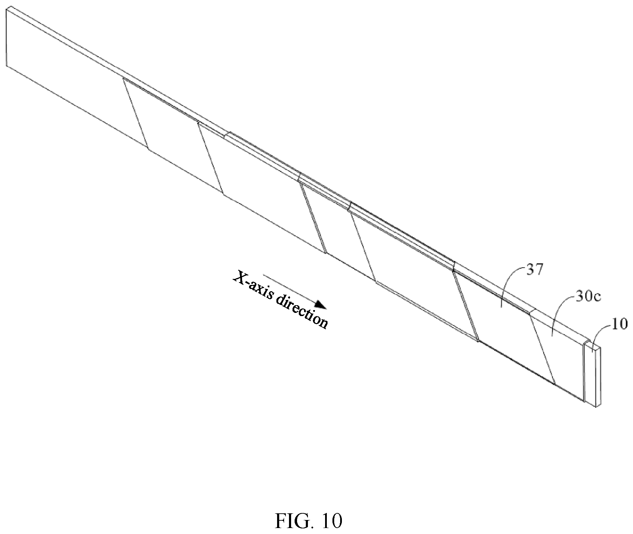

In an embodiment of this application, referring to FIG. 10, an extension direction of the metal strap 10 is defined as a length direction of the metal strap 10, and a wrapping direction of the insulating tape 37 is at an angle with the length direction of the metal strap 10.

It should be noted that the length direction of the metal strap 10 is defined as an X-axis direction of the metal strap 10. Specifically, the insulating tape 37 may wrap obliquely at a 45° angle along the X-axis direction of the metal strap 10, may be wrap obliquely at a 60° angle along the X-axis direction of the metal strap 10, or may wrap obliquely at a 15° angle along the X-axis direction of the metal strap 10, or the like. Certainly, in some embodiments, the insulating tape 37 may wrap obliquely at a 45° angle along the X-axis direction of the metal strap 10, which can improve the wrapping stability of the insulating tape 37.

In actual application, the insulating tape 37 may wrap around part of a surface of the metal strap 10 or around the entire surface of the metal strap 10 to completely cover the surface of the metal strap 10.

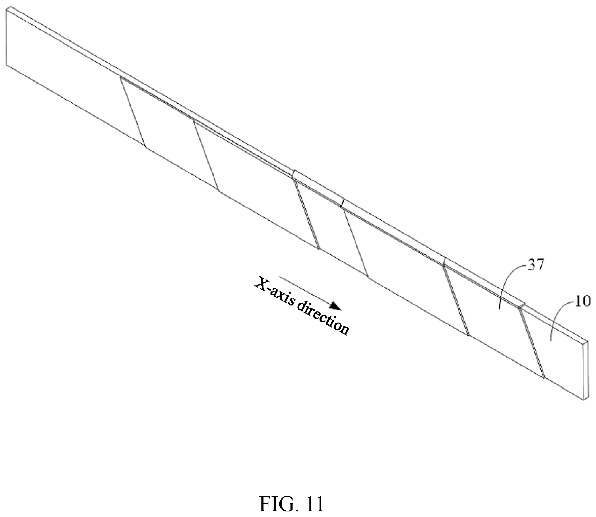

In an embodiment of this application, referring to FIG. 11, the insulating tape 37 is adhered to the metal strap 10.

In actual application, high-temperature-resistant glue may be used to adhere the insulating tape 37 to the surface of the metal strap 10. The high-temperature-resistant glue may be phenolic resin glue, urea-formaldehyde resin glue, temperature-resistant epoxy glue, polyimide glue, or the like.

With such design, the insulating tape 37 is adhered to the metal strap 10, which can enhance the connection strength between the insulating tape 37 and the metal strap 10.

In an embodiment of this application, referring to FIGs. 9 and 12, when the insulating member 30 includes a coating 30b, the coating 30b is a hydrophobic coating, and an apparent contact angle of the hydrophobic coating is defined as θ₁, satisfying a condition 151° ≤ θ₁ ≤ 153°. Optionally, the apparent contact angle θ₁ of the hydrophobic coating may be 151°, 151.5°, 152°, 152.5°, 153°, or the like.

It should be noted that the apparent contact angle of the hydrophobic coating refers to a contact angle between water and the coating 30b under static conditions.

With such design, the coating 30b is arranged as a hydrophobic coating and the apparent contact angle θ₁ of the hydrophobic coating is controlled between 151° to 153°, which can alleviate the problem of an electrolyte ejected from the battery 100 during thermal runaway adhering to and diffusing on the surface of the insulating member 30 or the metal strap 10, effectively prevent creepage formed by foreign matter adsorbed on the surface of the insulating member 30 or the surface of the metal strap 10, and further improve the insulation reliability of the battery 100 during thermal runaway.

In an embodiment of this application, referring to FIGs. 9 and 12, the coating 30b is an oleophobic coating, and an apparent contact angle of the oleophobic coating is defined as θ₂, satisfying a condition θ₂ ≥ 90°. Optionally, the apparent contact angle θ₂ of the oleophobic coating may be 90°, 93°, 96°, 100°, 110°, or the like.

It should be noted that the apparent contact angle of the oleophobic coating refers to a contact angle between oil and the coating 30b under static conditions.

With such design, the coating 30b is arranged as an oleophobic coating and the apparent contact angle θ₂ of the oleophobic coating is made greater than or equal to 90°, which can also alleviate the problem of an electrolyte ejected from the battery 100 during thermal runaway adhering to and diffusing on the surface of the insulating member 30 or the metal strap 10, effectively prevent creepage formed by foreign matter adsorbed on the surface of the insulating member 30 or the surface of the metal strap 10, and further improve the insulation reliability of the battery 100 during thermal runaway.

In an embodiment of this application, the battery 100 further includes an isolation layer 30c. The insulating member 30 is at least provided on a surface of the isolation layer 30c closer to the metal housing 21, and the isolation layer 30c is attached to the metal strap 10.

In actual application, the insulating member 30 may completely wrap a surface of the isolation layer 30c or may only wrap the surface of the isolation layer 30c closer to the metal housing 21.

Such design allows the high-temperature-resistant insulating member 30 to be first disposed on the surface of the non-high-temperature-resistant isolation layer 30c, and then the insulating member 30 and the isolation layer 30c as a whole are disposed between the metal strap 10 and the metal housing 21, so that insulation between the metal strap 10 and the metal housing 21 can be achieved through the insulating member 30 and the isolation layer 30c, thereby improving the insulation effect between the metal strap 10 and the metal housing 21.

In an embodiment of this application, the isolation layer 30c is sheet molding compound, phenolic molding compound/unsaturated polyester bulk molding compound, or epoxy glass fiber board.

With such design, one of sheet molding compound, phenolic molding compound/unsaturated polyester bulk molding compound, and epoxy glass fiber board is used as the isolation layer 30c, which has lower cost and better mechanical properties.

In an embodiment of this application, referring to FIGs. 1 to 7, a creepage distance between the metal strap 10 and the metal housing 21 is L, satisfying a condition that L is greater than or equal to 8 mm. Optionally, the creepage distance between the metal housing 21 and the metal strap 10 may be 8 mm, 8.5 mm, 8.8 mm, 9 mm, 9.5 mm, or the like.

With such design, the creepage distance is made greater than or equal to 8 mm, allowing for sufficiently long creepage distance between the battery cell 20 and the metal strap 10, which can improve the insulation reliability of the battery 100 during thermal runaway.

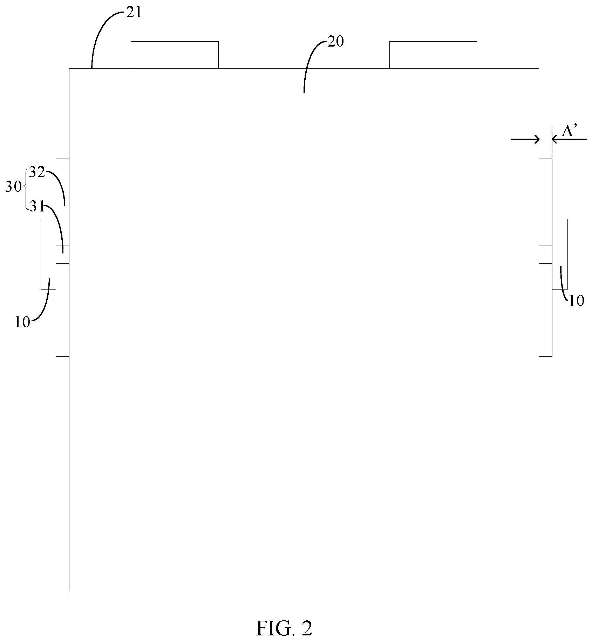

In an embodiment of this application, referring to FIGs. 1 and 2, the insulating member 30 includes a first insulating member 31 and a second insulating member 32. The first insulating member 31 is located between the battery cell 20 and the metal strap 10. The second insulating member 32 is located between the battery cell 20 and the metal strap 10, and the second insulating member 32 intersects with the first insulating member 31.

In this embodiment, thicknesses of the first insulating member 31 and the second insulating member 32 are consistent, and the thickness of the first insulating member 31 or the thickness of the second insulating member 32 constitutes the creepage distance between the battery cell 20 and the metal strap 10.

It should be noted that referring to FIG. 2, if the thickness of the first insulating member 31 or the second insulating member 32 is defined as A', the creepage distance L between the battery cell 20 and the metal strap 10 is equal to A', that is, A' is greater than or equal to 8 mm. Optionally, A' may be 8 mm, 8.5 mm, 8.8 mm, 9 mm, 9.5 mm, or the like.

Moreover, the thickness of the first insulating member 31 refers to a distance from a surface of the first insulating member 31 abutting against the metal strap 10 to a surface abutting against the battery cell 20. Similarly, the thickness of the second insulating member 32 refers to a distance from a surface of the second insulating member 32 abutting against the metal strap 10 to a surface abutting against the battery cell 20.

In actual application, distances from two end portions of the second insulating member 32 to the metal strap 10 may be the same or different.

In some embodiments, the first insulating member 31 and the second insulating member 32 may be an integrally formed structure, which can not only enhance the strength of the insulating member 30 but also simplify the preparation process of the insulating member 30.

In actual application, both the first insulating member 31 and the second insulating member 32 may be structures in shapes such as sheet, rod, or plate.

With such design, the housing of the battery cell 20 expands and deforms during thermal runaway of the battery 100, the curved housing 20 does not get into contact with the entire surface of the metal strap 10, making it only necessary to provide insulation and prevent melting. In this way, using the first insulating member 31 and second insulating member 32 that intersect with each other to separate the metal housing 21 from the metal strap 10 can effectively reduce the material usage of the insulating member 30.

In an embodiment of this application, referring to FIGs. 1 and 2, a plurality of second insulating members 32 are provided. The plurality of second insulating members 32 are spaced apart from each other and all intersect with the first insulating member 31. Each battery cell 20 is correspondingly provided with at least one of the second insulating members 32. Such design can enable each battery cell 20 and the metal strap 10 to be separated by the first insulating member 31 and at least one second insulating member 32, thereby further improving the insulation reliability of the insulating member 30 for the battery cells 20 and the metal strap 10.

In an embodiment of this application, referring to FIGs. 1 and 2, an angle between the first insulating member 31 and the second insulating member 32 is 90 degrees. Such design can make the first insulating member 31 and the second insulating member 32 roughly form a cross-shaped structure, which can better separate the battery cells 20 from the metal strap 10.

In an embodiment of this application, referring to FIGs. 1 and 2, the battery cell 20 is defined to have a height direction a and a width direction b. The first insulating member 31 is strip-shaped, and a length direction c thereof extends along the width direction b of the battery cell 20. Such design can enable the first insulating member 31 to effectively separate the battery cells 20 from the metal strap 10 while further reducing the material usage of the first insulating member 31.

It should be noted that the height direction a of the battery cell 20 refers to a vertical direction when the battery cell 20 is placed in an electric device. The width direction b of the battery cell 20 refers to an arrangement direction of the plurality of battery cells 20.

The length direction c of the first insulating member 31 refers to the longest direction of the first insulating member 31 among the three directions.

In an embodiment of this application, referring to FIGs. 1 and 2, the battery cell 20 is defined to have a height direction a and a width direction b. The second insulating member 32 is strip-shaped, and a length direction d thereof extends along the height direction a of the battery cell 20. Such design can enable the second insulating member 32 to effectively separate the battery cells 20 from the metal strap 10 while further reducing the material usage of the second insulating member 32.

It should be noted that the length direction d of the second insulating member 32 refers to the longest direction of the second insulating member 32 among the three directions.

In an embodiment of this application, referring to FIGs. 1 and 2, distances from two end portions of the second insulating member 32 to the metal strap 10 are the same. That is, the first insulating member 31 and the second insulating member 32 intersect and are connected with each other at their central portions.

Such design can enable the first insulating member 31 and the second insulating member 32 to better separate the metal strap 10 from the battery cells 20, thereby further improving the insulation reliability of the insulating member 30 for the battery cells 20 and the metal strap 10.

In an embodiment of this application, referring to FIGs. 1 and 2, the first insulating member 31 corresponds to a central axis of the metal strap 10.

It should be noted that the first insulating member 31 in this embodiment is an axisymmetric structure, for example, may be an axisymmetric structure in shapes such as sheet, rod, or plate. Moreover, the metal strap 10 in this embodiment is also an axisymmetric structure.

In actual application, a width of the first insulating member 31 may be consistent with a width of the metal strap 10, may be greater than the width of the metal strap 10, or may be less than the width of the metal strap 10, provided that the housing of the battery cell 20 can be separated from the metal strap 10. This is not specifically limited herein.

Such design can more stably separate the housing of the battery cell 20 from the metal strap 10, thereby improving the insulation reliability of the insulating member 30 for the battery cells 20 and the metal strap 10.

In an embodiment of this application, referring to FIGs. 1 and 2, each second insulating member 32 corresponds to a central axis of one battery cell 20.

It should be noted that the second insulating member 32 in this embodiment is an axisymmetric structure, for example, may be an axisymmetric structure in shapes such as sheet, rod, or plate. Moreover, the metal strap 10 in this embodiment is also an axisymmetric structure.

In actual application, a width of the second insulating member 32 may be consistent with a width of the battery cell 20, may be greater than the width of the battery cell 20, or may be less than the width of the battery cell 20, provided that the housing of the battery cell 20 can be separated from the metal strap 10. This is not specifically limited herein.

It should be noted that the width of the second insulating member 32 depends on a pole diameter in the corresponding battery cell 20.

Such design can also more stably separate the housing of the battery cell 20 from the metal strap 10, thereby improving the insulation reliability of the insulating member 30 for the battery cells 20 and the metal strap 10.

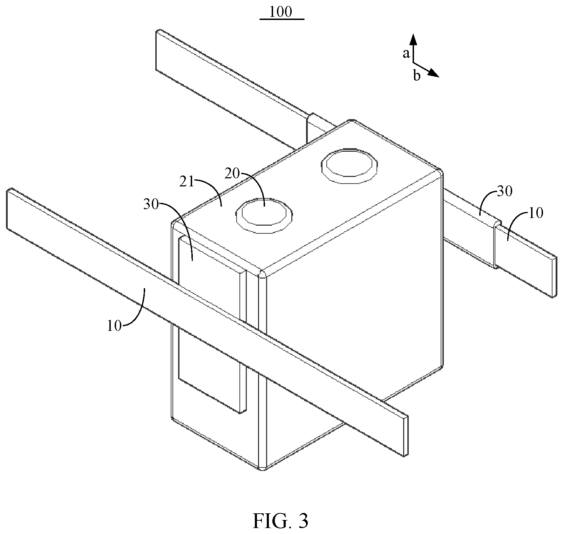

In another embodiment of this application, referring to FIGs. 3 to 5 and FIG. 7, the insulating member 30 completely covers a surface of the metal strap 10 facing the battery cells 20.

In actual application, an end portion of the insulating member 30 may exceed an end portion of the metal strap 10 or may be flush with the end portion of the metal strap 10.

With such design, the insulating member 30 completely covering the surface of the metal strap 10 facing the battery cell 20 can better separate the housing of the battery cell 20 from the metal strap 10 and better alleviate the problem of insulation failure between the battery cells 20 and the metal strap 10.

In another embodiment of this application, referring to FIGs. 3 to 5 and FIG. 7, the battery cell 20 is defined to have a height direction a. In the height direction a of the battery cell 20, both end portions of the insulating member 30 exceed the metal strap 10.

It should be noted that a length by which the end portion of the insulating member 30 exceeds the metal strap 10 determines the creepage distance between the battery cell 20 and the metal strap 10.

Such design can extend the shortest distance value between a surface of the insulating member 30 abutting against the battery cell 20 and the surface of the metal strap 10, allowing for sufficiently long creepage distance between the battery cell 20 and the metal strap 10, which can improve the insulation reliability of the battery 100 during thermal runaway.

In some embodiments, the portion of the end portion of the insulating member 30 exceeding the metal strap 10 may extend along the height direction a of the battery cell 20.

In actual application, the insulating member 30 may be a separate block structure, and each battery cell 20 is correspondingly provided with one insulating member 30. Alternatively, the insulating member 30 may be a long strip plate structure, and each battery cell 20 corresponds to a different position of the insulating member 30.

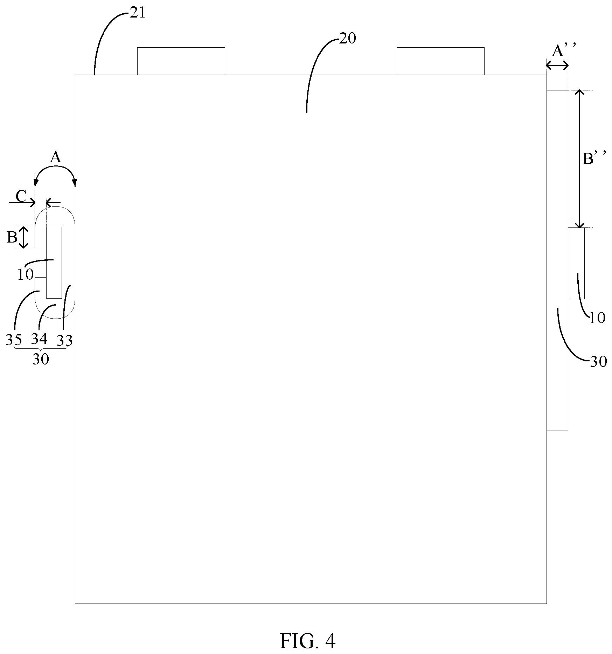

In this embodiment, referring to FIG. 4, a thickness of the insulating member 30 is defined as A", the length by which the end portion of the insulating member 30 exceeds the metal strap 10 is defined as B", and the creepage distance L between the battery cell 20 and the metal strap 10 is A" + B", that is, A" + B" is greater than or equal to 8 mm. A" + B" may be 8 mm, 8.5 mm, 8.8 mm, 9 mm, 9.5 mm, or the like.

In some embodiments, referring to FIGs. 3 to 5, the metal strap 10 is defined to have a front surface facing the battery cell 20 and a back surface opposite the front surface, and both end portions of the insulating member 30 are bent toward the back surface.

In this embodiment, the insulating member 30 may include an insulating plate 33, two connecting sections 34, and two limiting plates 35. The insulating plate 33 is located between the battery cells 20 and the metal strap 10, that is, the insulating plate 33 is located on the front surface of the metal strap 10. The two connecting sections 34 are respectively connected to two opposite side edges of the insulating plate 33 and respectively abut against two opposite side edges of the metal strap 10. Each limiting plate 35 is connected to a side edge of a connecting section 34 farther away from the insulating plate 33, the limiting plate 35 is located on the back surface of the metal strap 10, and the limiting plate 35 is opposite the insulating plate 33. The shortest path on an outer surface of the connecting section 34, a length of the limiting plate 35, and a thickness of the limiting plate 35 constitute the creepage distance between the battery cell 20 and the metal strap 10.

In this embodiment, the insulating plate 33, the connecting sections 34, and the limiting plates 35 are all insulating structures, so that the insulating member 30 has good insulation reliability.

It should be noted that referring to FIG. 4, the shortest path on the outer surface of the connecting section 34 is defined as A, the length of the limiting plate 35 is defined as B, the thickness of the limiting plate 35 is defined as C, and the creepage distance L between the battery cell 20 and the metal strap 10 is A + B + C, that is, A + B + C is greater than or equal to 8 mm. A + B + C may be 8 mm, 8.5 mm, 8.8 mm, 9 mm, 9.5 mm, or the like.

Moreover, the shortest path on the outer surface of the connecting section 34 refers to the shortest path from a side of the connecting section 34 abutting against the battery cell 20 to a side abutting against the battery cell 20. The length of the limiting plate 35 refers to a distance from the top end to the bottom end of the limiting plate 35 in the height direction a of the battery cell 20. The width of the limiting plate 35 refers to a distance from a side of the limiting plate 35 closer to the metal strap 10 to a side farther away from the metal strap 10.

In some embodiments, the insulating plate 33, the two connecting sections 34, and the two limiting plates 35 may be an integrally formed structure, which can not only enhance the strength of the insulating member 30 but also simplify the preparation process of the insulating member 30.

In actual application, the connecting section 34 may be a straight connecting section 34, an arc-shaped connecting section 34, a wave-shaped connecting section 34, or the like.

Such design can make the insulating member 30 semi-enclose or fully enclose the metal strap 10, that is, it can be connected to the metal strap 10 to improve the connection reliability between the insulating member 30 and the metal strap 10, while providing sufficient creepage distance between the battery cell 20 and the metal strap 10.

In an embodiment of this application, referring to FIGs. 3 to 5, the connecting section 34 is an arc-shaped connecting section 34.

In some embodiments, the arc-shaped connecting section 34 may be formed between the insulating plate 33 and the limiting plate 35 by bending.

Such design can reduce the stress at junctions between the connecting section 34 and the insulating plate 33 and limiting plate 35, thereby improving the connection reliability between the connecting section 34 and the insulating plate 33 and limiting plate 35.

In still another embodiment of this application, both end portions of the insulating member 30 cover the back surface of the metal strap 10, and the two end portions of the insulating member 30 partially overlap with or are spaced apart from each other.

In some embodiments, referring to FIGs. 4 and 5, the two end portions of the insulating member 30 are spaced apart from each other, that is, the insulating member 30 can be made to be substantially C-shaped insulating member 30, so that the insulating member 30 semi-encloses the metal strap 10, which facilitates assembly of the insulating member 30 with the metal strap 10.

In some other embodiments, referring to FIG. 7, the two end portions of the insulating member 30 partially overlap with each other, so that the two end portions of the insulating member 30 form an overlapping portion 38, which can make the insulating member 30 fully enclose the metal strap 10, thereby improving the insulation effect of the insulating member 30.

It should be noted that the two end portions of the insulating member 30 are end portions of the two limiting plates 35. Moreover, the overlapping portion 38 formed by the two end portions of the insulating member 30 is a portion where the two limiting plates 35 overlap.

In some embodiments, in the height direction a of the battery cell 20, the overlapping portion 38 formed by the two end portions of the insulating member 30 may overlap by 5 mm, or certainly, they may overlap by 3 mm, 4 mm, 6 mm, 7 mm, or the like.

In this embodiment, referring to FIG. 7, an overlapping length of the overlapping portion 38 is L'.

In an embodiment of this application, referring to FIGs. 6 and 7, the battery 100 further includes a heat shrink tube 40, and the heat shrink tube 40 is sleeved on an outer side of the insulating member 30.

It should be noted that the heat shrink tube 40 refers to a structure that can shrink at a preset temperature. For example, the heat shrink tube 40 may be made of polytetrafluoroethylene.

With such design, the heat shrink tube 40 being sleeved on the outer side of the insulating member 30 can fix the insulating member 30 and the metal strap 10 and provide secondary protection for the metal strap 10, which can effectively improve the insulation reliability of the insulating member 30.

This application further proposes an electric device, where the electric device includes the foregoing battery 100. For a specific structure of the battery 100, refer to the foregoing embodiments. The electric device adopts all the technical solutions of all the foregoing embodiments, and therefore has at least all the beneficial effects brought by the technical solutions of the foregoing embodiments. Details are not described herein again.

According to some embodiments of this application, this application provides a battery 100, including a plurality of battery cells 20, a metal strap 10, and an insulating member 30. The plurality of battery cells 20 are arranged side by side. The metal strap 10 wraps around the plurality of battery cells 20 and is configured to bind the plurality of battery cells 20. The insulating member 30 is connected to the battery cells 20 and/or the metal strap 10, and the insulating member 30 is at least partially located between the battery cells 20 and the metal strap 10. Under a condition that a melting temperature is greater than or equal to 300°C and less than or equal to 1500°C, insulation resistance between the metal strap 10 and the battery cell 20 is greater than or equal to 1 megohm.

In the technical solutions of the embodiment of this application, an independent insulating member 30 is provided, the insulating member 30 is made to be connected to the battery cells 20 or the metal strap 10, and the insulating member 30 is made to be at least partially located between the battery cells 20 and the metal strap 10, so that the insulating member 30 can protect the battery cell 20. Under the condition that the melting temperature is greater than or equal to 300°C and less than or equal to 1500°C, the insulation resistance between the metal strap 10 and the battery cell 20 is greater than or equal to 1 megohm. In this way, even when the battery 100 experiences thermal runaway, the insulation resistance between the metal strap 10 and the battery cell 20 can still be maintained within a range greater than or equal to 1 megohm, allowing for no problem of insulation failure between the metal strap 10 and the battery cell 20 under thermal runaway of the battery 100.

This application further proposes an energy storage apparatus, where the energy storage apparatus includes the foregoing battery 100. For a specific structure of the battery 100, refer to the foregoing embodiments. The energy storage apparatus adopts all the technical solutions of all the foregoing embodiments, and therefore has at least all the beneficial effects brought by the technical solutions of the foregoing embodiments. Details are not described herein again.

The foregoing descriptions are merely preferred embodiments of this application and are not intended to limit the patent scope of this application. Any equivalent structural transformations made by using the content of the specification and drawings of this application under the inventive concept of this application, or any direct or indirect application in other related technical fields are included in the patent protection scope of this application.

## Claims

1. A battery, comprising:
a plurality of battery cells, wherein the plurality of battery cells are arranged side by side, and each battery cell comprises a metal housing;
a metal strap, wherein the metal strap wraps around the plurality of the battery cells and is configured to bind the plurality of the battery cells; and
an insulating member, wherein the insulating member is at least partially located between the battery cells and the metal strap; wherein
an insulation resistance between the metal strap and each metal housing is greater than or equal to A × B × 1000 ohms, wherein A is a nominal voltage of the battery cell measured in V; and B is the number of the battery cells connected in series.

2. The battery according to claim 1, wherein the insulating member is placed at an ambient temperature greater than or equal to 250°C and less than or equal to 500°C for 5 min, such that the insulation resistance between the metal strap and each metal housing is greater than or equal to A × B × 1000 ohms.

3. The battery according to claim 1 or 2, wherein the insulating member is phenolic molding compound/unsaturated polyester bulk molding compound, epoxy glass fiber, mica, ceramic coating, polytetrafluoroethylene, polyimide, or aerogel.

4. The battery according to claim 1, wherein the insulating member is placed at an ambient temperature greater than or equal to 500°C and less than or equal to 1500°C for 1 min, such that the insulation resistance between the metal strap and each metal housing is greater than or equal to A × B × 1000 ohms.

5. The battery according to claim 4, wherein the insulating member is mica or ceramic coating.

6. The battery according to claim 1, wherein the insulating member is placed at an ambient temperature greater than or equal to 250°C and less than or equal to 500°C for 5 min, such that the insulation resistance between the metal strap and each metal housing is greater than or equal to A × B × 5000 ohms.

7. The battery according to claim 1, wherein the insulating member is placed for 1 min at an ambient temperature greater than or equal to 500°C and less than or equal to 1500°C, such that the insulation resistance between the metal strap and each metal housing is greater than or equal to A × B × 5000 ohms.

8. The battery according to claim 1, wherein A is greater than or equal to 3.2 V and A is less than or equal to 3.8 V; and/or
B is greater than or equal to 48 and B is less than or equal to 104.

9. The battery according to claim 1, wherein a positive electrode plate of the battery cell contains lithium-containing phosphate, and the insulating member is placed at an ambient temperature greater than or equal to 250°C and less than or equal to 500°C for 5 min, such that the insulation resistance between the metal strap and each metal housing is greater than or equal to A × B × 1000 ohms.

10. The battery according to claim 1, wherein a positive electrode plate of the battery cell comprises LiₐNi_{b}Co_{c}M_{d}OₑA_{f}, wherein 0 < a ≤ 1.2; 0 < b < 1; 0 < c < 1; 0 < d < 1; 1 ≤ e ≤ 2; 0 ≤ f ≤ 1; M contains but is not limited to one or more of Mn, Al, Zr, Zn, Cu, Cr, Mg, Fe, V, Ti, and B; A contains but is not limited to one or more of N, F, S, and Cl; and the insulating member is placed at an ambient temperature greater than or equal to 500°C and less than or equal to 1500°C for 1 min, such that the insulation resistance between the metal strap and each metal housing is greater than or equal to A × B × 1000 ohms.

11. The battery according to any one of claims 1 to 10, wherein the insulating member is an insulating substrate, and the insulating substrate is attached to the metal strap;
the insulating member is an insulating tape, and the insulating tape wraps around the metal strap; or
the insulating member is a coating, and the coating is applied on the metal strap.

12. The battery according to claim 11, wherein the insulating tape comprises ceramic rubber and fiber cloth that are laminated.

13. The battery according to claim 11, wherein when the insulating member comprises the coating, the coating is a hydrophobic coating, and an apparent contact angle of the hydrophobic coating is defined as θ1, satisfying a condition 151° ≤ θ1 ≤ 153°; and/or
the coating is an oleophobic coating, an apparent contact angle of the oleophobic coating is defined as θ2, satisfying a condition θ2 ≥ 90°.

14. The battery according to any one of claims 1 to 10, wherein the battery further comprises an isolation layer, the insulating member is at least disposed on a surface of the isolation layer closer to the metal housing, and the isolation layer is attached to the metal strap.

15. The battery according to claim 14, wherein the isolation layer is sheet molding compound, phenolic molding compound/unsaturated polyester bulk molding compound, or epoxy glass fiber board.

16. The battery according to any one of claims 1 to 15, wherein a creepage distance between the metal strap and the metal housing is L, satisfying a condition that L is greater than or equal to 8 mm.

17. The battery according to any one of claims 1 to 10, wherein the insulating member comprises:
a first insulating member, wherein the first insulating member is located between the battery cells and the metal strap;
a second insulating member, wherein the second insulating member is located between the battery cells and the metal strap, and the second insulating member intersects with the first insulating member.

18. The battery according to claim 17, wherein a plurality of second insulating members are provided, the plurality of the second insulating members are spaced apart from each other and all intersect with the first insulating member, and each battery cell is correspondingly provided with at least one of the second insulating members; and/or
an angle between the first insulating member and the second insulating member is 90 degrees; and/or
the battery cell is defined to have a height direction and a width direction, the first insulating member is strip-shaped, and a length direction thereof extends along the width direction of the battery cell; and/or
the battery cell is defined to have a height direction and a width direction, the second insulating member is strip-shaped, and a length direction thereof extends along the height direction of the battery cell.

19. The battery according to any one of claims 1 to 10, wherein the insulating member completely covers a surface of the metal strap facing the battery cells.

20. The battery according to claim 19, wherein the battery cell is defined to have a height direction, and in the height direction of the battery cell, both end portions of the insulating member exceed the metal strap.

21. The battery according to claim 20, wherein the metal strap is defined to have a front surface facing the battery cell and a back surface opposite the front surface, and both end portions of the insulating member are bent toward the back surface.

22. The battery according to claim 21, wherein both end portions of the insulating member cover the back surface of the metal strap, and the two end portions of the insulating member partially overlap with or are spaced apart from each other.

23. The battery according to any one of claims 1 to 10, wherein the battery further comprises a heat shrink tube, and the heat shrink tube is sleeved on an outer side of the insulating member.

24. An electric device, comprising the battery according to any one of claims 1 to 23.

25. An energy storage apparatus, comprising the battery according to any one of claims 1 to 23.
